# EUROPÄISCHE PATENTSCHRIFT

(11) **EP 1 151 879 B1**
(45) Veröffentlichungstag und Bekanntmachung des Hinweises auf die Patenterteilung: **26.04.2006**
(21) Anmeldenummer: 01106084.5
(22) Anmeldetag: 13.03.2001
(51) Int. Cl.: B60H 1/34

(54) **Belüftungsvorrichtung für den Innenraum eines Fahrzeugs**
Ventilation device for a vehicle interior
Dispositif de ventilation pour l'habitacle d'un véhicule

(30) Priorität: 04.05.2000 DE 20007819 U
(43) Veröffentlichungstag der Anmeldung: 07.11.2001
(73) Patentinhaber: REUM GmbH & Co. Betriebs KG, 74736 Hardheim (DE)
(72) Erfinder: Stang, Rolf, 74722 Buchen-Hainstadt (DE)
(74) Vertreter: Maser, Jochen

(56) Entgegenhaltungen:
- EP-A- 0 713 792
- DE-A- 4 338 099
- GB-A- 1 040 469
- US-A- 5 620 366

## Beschreibung

### TECHNISCHES GEBIET

Die vorliegende Erfindung betrifft eine Belüftungsvorrichtung für den Innenraum eines Fahrzeugs mit zumindest einem an dem Instrumententafelbauteil des Fahrzeugs angeordneten Luftaustritt, einem Luftverteilsystem zum Zuführen der Luft zu dem Luftaustritt und einer Steuereinrichtung zum Steuern der Menge und Temperatur der zugeführten Luft.

Instrumententafelbauteile werden in jedes Fahrzeug eingebaut. Sie dienen einerseits der Aufnahme der Instrumentenanzeigeeinheiten für die Geschwindigkeit, Drehzahl, Temperatur, Uhrzeit und dergleichen Information und weisen andererseits Luftaustrittsöffnungen zur Belüftung des Innenraums auf.

### STAND DER TECHNIK

Es ist bekannt, Instrumententafelbauteile so auszubilden, dass sie sich unterhalb der Frontscheibe eines Fahrzeugs über die gesamte Breite des Innenraumes erstrecken, wobei im unmittelbaren Randbereich zur Frontscheibe eine Defrosterdüse vorhanden ist, über die Luft zunächst an die Frontscheibe und daran anschließend in das Innere des Fahrzeugs zugeführt wird. Über Defrosterdüsen werden auch die Seitenscheiben des Fahrzeugs angeströmt. Weiterhin sind bei den bekannten Instrumententafelbauteilen jeweils im rechten und linken Seitenbereich verstellbare Ausströmeinrichtungen vorhanden, über die zusätzlich Luft in das Innere des Fahrzeugs einströmen kann. Auch im Mittenbereich des Instrumententafelbauteils kann eine Ausströmeinrichtung für Luft vorhanden sein. Bei den bekannten Luftaustrittsausnehmungen ist es so, dass die Luft mit relativ hoher Geschwindigkeit austritt, so dass es für die Insassen des Fahrzeugs zu unangenehmen Zuglufterscheinungen kommen kann. Durch die genau definierte Positionierung der Luftaustrittsöffnungen ist die Freiheit hinsichtlich der Oberflächengestaltung des Instrumententafelbauteils designmäßig sehr stark eingeschränkte. Das Dokument DE-A-4338099 offenbart eine Belüftungsvorrichtung gemäß dem ersten Teil des Anspruchs 1.

### DARSTELLUNG DER ERFINDUNG

Ausgehend von dem dargestellten Stand der Technik liegt der vorliegenden Erfindung die Aufgabe beziehungsweise das technische Problem zugrunde, ausgehend von einer Belüftungsvorrichtung der eingangs genannten Art eine Weiterbildung derselben anzugeben, die das Auftreten von Zugluft vermeidet und eine größtmögliche Designfreiheit für die Gestaltung des Instrumententafelbauteils gewährleistet. Weiterhin soll noch eine wirtschaftliche Herstellbarkeit der Instrumententafelbauteile mit der erfindungsgemäßen Belüftungsvorrichtung gewährleistet werden.

Die erfindungsgemäße Belüftungsvorrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Belüftungsvorrichtung zeichnet sich demgemäß dadurch aus, dass der Luftaustritt als zumindest ein auf der Oberfläche des Instrumententafelbauteils verteilter großflächiger Austrittsbereich mit einer Vielzahl von kleinen Austrittsausnehmungen ausgebildet und die Strömungsgeschwindigkeit der Luft so klein gehalten ist, derart, dass ein diffuser und kein zielgerichteter Luftaustritt erfolgt.

Eine besonders bevorzugte Ausgestaltung zeichnet sich dadurch aus, dass der Durchmesser der Austrittsausnehmungen im Bereich zwischen 0,5 bis 5,0 mm (Millimeter), insbesondere im Bereich zwischen 1,5 bis 3,0 mm (Millimeter), liegt.

Der großflächige Austrittsbereich ist bei einer vorteilhaften Ausgestaltung als Perforationsfläche ausgebildet, wobei die Luftaustrittsausnehmungen rasterförmig vorhanden sein können.

Eine besonders bevorzugte Ausgestaltung der Belüftungsvorrichtung zeichnet sich dadurch aus, dass der großflächige Austrittsbereich vornehmlich auf der Oberseite des Instrumententafelbauteils vorhanden ist, wobei der Austrittsbereich im Wesentlichen über die gesamte Breite des Instrumententafelbauteils vorhanden sein kann. Erfindungsgemäß kann der mittlere Bereich des großflächigen Austrittsbereichs gegenüber den Randbereichen verbreitert ausgebildet sein.

Eine hinsichtlich der Herstellung besonders bevorzugte Ausgestaltung zeichnet sich dadurch aus, dass der großflächige Austrittsbereich mit einer homogen perforierten Abdeckeinrichtung, bestehend aus einer Trägereinheit und einer Kaschiereinheit, verkleidet ist. Dabei kann die Kaschiereinheit aus Leder, Metall, Kunststoff oder Textilfasern bestehen. Gegebenenfalls kann eine Lackierung eingesetzt werden.

Eine besonders vorteilhafte Weiterbildung der erfindungsgemäßen Belüftungsvorrichtung zeichnet sich dadurch aus, dass zusätzlich zum großflächigen Austrittsbereich mit diffusem Austritt weitere, insbesondere düsenförmig ausgebildete Austrittsbereiche mit zielgerichtetem Luftaustritt vorhanden sind. Dadurch kann beispielsweise im Bereich der Frontscheibe eine zielgerichtete Defrostung erzielt werden.

Bevorzugt sind diese weiteren Austrittsbereiche innerhalb des großflächigen Austrittsbereichs angeordnet, was dem Design des Instrumententafelbauteils zugute kommt.

Hierbei ist es besonders vorteilhaft, dass der großflächige Austrittsbereich und die weiteren Austrittsbereiche getrennt hinsichtlich Luftmenge und/oder Lufttemperatur ansteuerbar ausgebildet sind.

Es hat sich als vorteilhaft herausgestellt, die Anzahl der Luftaustrittsausnehmungen pro Quadratzentimeter (cm²) im Bereich zwischen 10 und 50 vorzunehmen.

Durch die erfindungsgemäße Belüftungsvorrichtung wird eine Optimierung des Komforts hinsichtlich der Belüftung im Fahrzeug für die Insassen gewährleistet. Es ist eine gleichmäßige Temperierung unter Vermeidung von Zuglufterscheinungen möglich. Des Weiteren besteht aufgrund des großflächigen Austrittsbereichs eine großzügige Designfreiheit hinsichtlich einer ansprechenden Ausbildung der Oberfläche des Instrumententafelbauteils.

Schließlich ist noch als vorteilhaft herauszuheben, dass unterhalb des großflächigen Austrittsbereiches gegebenenfalls ein Luftverteilungssystem eingesetzt werden kann mit verschiedenen Schleusen zur Luftführung, die direkt an das Instrumententafelbauteil angeschlossen sind. Dabei können heute gebräuchliche Verteilersysteme übernommen werden. Die Steuerung der Zufuhr und Mischung der Lufttemperatur erfolgt über eine zentrale Verteilereinheit, wie bei bisherigen Systemen. Durch die erfindungsgemäße Belüftungsvorrichtung besteht eine weitgehende Gestaltungsfreiheit der Oberflächengeometrie des Instrumententafelbauteils. Es sei nochmals darauf hingewiesen, dass die diffuse Belüftung Zuglufterscheinungen vermeidet und daher für die Insassen des Fahrzeugs als besonders angenehm empfunden wird.

Die im Stand der Technik bekannte Lösung für eine Belüftungsvorrichtung zeichnet sich dadurch aus, dass relativ kleine Öffnungen vorhanden sind, durch die die Luft mit relativ hoher Strömungsgeschwindigkeit (im Bereich bis zu 5,0 m/s (Meter pro Sekunde)) in das Innere des Fahrzeugs strömt. Bei der erfindungsgemäßen Belüftungsvorrichtung ist es so, dass durch die Summe der Einzel-Austrittsausnehmungen eine relativ große Öffnung geschaffen wird, so dass eine kleine Strömungsgeschwindigkeit, insbesondere im Bereich zwischen 0,5 bis 1,0 m/s, angesetzt werden kann, um für eine ausreichende Belüftung/Beheizung des Innenraums zu sorgen.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Schnitt durch eine Belüftungsvorrichtung mit Instrumententafelbauteil mit großflächigem Austrittsbereich und zielgerichteten Luftaustrittsdüsen,
- Fig. 2: schematische Perspektivdarstellung der Belüftungsvorrichtung gemäß Fig. 1 und
- Fig. 3: schematischer Schnitt durch eine Belüftungsvorrichtung mit Instrumententafelbauteil gemäß dem Stand der Technik.

### WEGE ZUM AUSFÜHREN DER ERFINDUNG

Fig. 3 zeigt eine Belüftungsvorrichtung 30 innerhalb eines Instrumententafelbauteils 32 in bekannter Art und Weise. Das Instrumententafelbauteil 32 erstreckt sich hierbei unterhalb der Windschutzscheibe 19 des Fahrzeugs über die gesamte Breite des Innenraums des Fahrzeugs. Unterhalb des Instrumententafelbauteils 32 ist ein Luftverteilsystem 14 angeordnet, das über einen Kanal 38 einer Defrosterdüse 34 strömungsförmig gerichtete Luft zuführt und das über einen Kanal 40 einer Mitteldüse 36 ebenfalls zielgerichtet Strömungsluft zuführt. Des Weiteren sind auf beiden Seiten des Instrumententafelbauteils 32 in Fig. 3 aufgrund der Schnittführung nicht dargestellte Seitendüsen vorhanden, zu denen ebenfalls über Kanäle vom Luftverteilsystem 14 zielgerichtet Luft zugeführt wird. Die Steuerung der Luftmenge und Lufttemperatur übernimmt eine Steuereinrichtung.

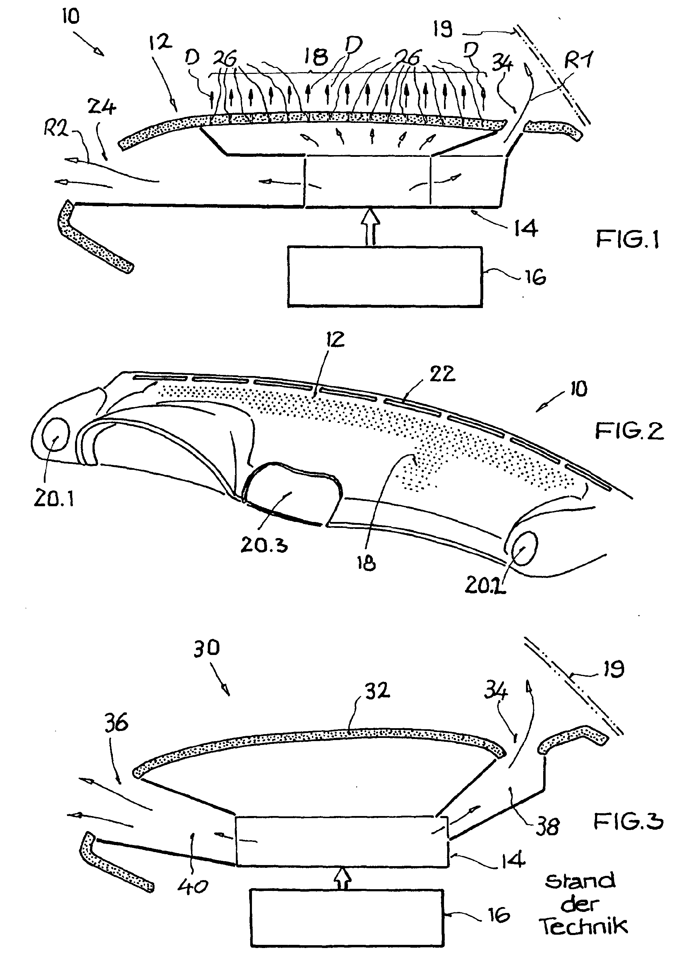

Die in Fig. 1 in einem Mittenschnitt schematisch dargestellte Belüftungsvorrichtung 10 für ein Instrumententafelbauteil 12 besitzt gegenüber dem bekannten Instrumententafelbauteil 32 im Wesentlichen eine ähnliche Oberflächenkontur. Das Luftverteilsystem 14 ist unterhalb des Instrumententafelbauteils 12 angeordnet und wird von einer Steuereinrichtung 16 angesteuert. Im Unterschied zu dem bekannten Instrumententafelbauteil 32 ist bei dem Instrumententafelbauteil 12 gemäß Fig. 1 auf dessen Oberseite ein großflächiger Austrittsbereich 18 vorhanden, der sich gemäß der Darstellung in Fig. 2 im Wesentlichen über die gesamte Breite der Oberseite des Instrumententafelbauteils 12 erstreckt. Der Austrittsbereich 18 ist als Perforationsfläche mit rasterförmig verteilt vorhandenen Austrittsausnehmungen 26 mit kleinem lichten Innenmaß ausgebildet, durch den die Luft diffus austritt (Pfeile D).

In unmittelbarer Nachbarschaft zu dem Anschluss der Frontscheibe des Fahrzeugs an das Instrumententafelbauteil 12, d.h. in Fig. 1 im rechten Randbereich, ist im Wesentlichen über die gesamte Breite ein zusätzlicher Luftzuführungskanal 38 vorhanden, der über das Luftverteilsystem 14 mit strömungsgerichteter Luft (Pfeil R1) versorgt wird und in einer Defrosterdüse 22 endet.

Der übrige großflächige Austrittsbereich 18 besitzt wie erwähnt eine rasterförmig verteilte Perforation mit kleinen Austrittsausnehmungen 20, durch die hindurch die Luft diffus in den Innenraum des Fahrzeugs austritt. Im Bereich des großflächigen Austrittsbereichs 18 tritt die Luft mit einer deutlich verminderten Austrittsgeschwindigkeit gegenüber dem Bereich der Defrosterdüse 22 aus. Gleichzeitig ist an das Luftverteilsystem 14 ein weiterer Kanal 40 angeschlossen, über den die Luft zielgerichtet (Pfeil R2) über einen düsenförmigen mittleren Austrittsbereich (Mitteldüse 24) in das Innere des Fahrzeugs zielgerichtet ausströmen kann.

Weiterhin ist auf beiden Seiten des Instrumententafelbauteils 12 jeweils ein weiterer düsenförmigen Austrittsbereich (Seitendüsen) 20.1 beziehungsweise 20.2 vorhanden, über den der Innenraum mit strömungsgerichteter Luft versorgt werden kann.

Die erfindungsgemäße Belüftungsvorrichtung gewährleistet durch ihre großflächig geschlossene indirekte Belüftung einen hohen Komfort und vermeidet insbesondere Zuglufterscheinungen. Separate Defrosterdüsen können entfallen, indem im Defrosterdüsenbereich unterhalb des großflächigen Austrittsbereichs separate Kanäle vorhanden sind, innerhalb derer die Luft mit erhöhter Strömungsgeschwindigkeit zugeführt wird. Zusätzlich können weiterhin Seitendüsen und Mitteldüsen zum Anströmen der Insassen vorhanden sein. Die Ausbildung der zusätzlich vorhandenen strömungsgerichteten Düsen kann sich an bereits vorhandenen Lösungen orientieren.

Die zusätzlichen Seitendüsen und Mitteldüsen können auch unterhalb des großflächigen Austrittsbereichs vorhanden sein, so dass für das Instrumententafelbauteil ein optisch ansprechendes Design umgesetzt werden kann.

## Patentansprüche

1. Belüftungsvorrichtung (10) für den Innenraum eines Fahrzeuges mit
- zumindest einem an dem Instrumententafelbauteil (12) des Fahrzeugs angeordneten Luftaustritt,
- einem Luftverteilsystem (14) zum Zuführen der Luft zu dem Luftaustritt,
- einer Steuereinrichtung (16) zum Steuern der Menge und Temperatur der zugeführten Luft und
- zumindest einem auf der Oberfläche des Instrumententafelbauteils (12) verteilten großflächigen Austrittsbereich (18) mit einer Vielzahl von kleinen Austrittsausnehmungen (26), die die Strömungsgeschwindigkeit der Luft so klein halten, dass ein diffuser und kein zielgerichteter Luftaustritt erfolgt,
wobei der großflächige Austrittsbereich (18) und die weiteren Austrittsbereiche hinsichtlich Luftmenge getrennt ansteuerbar sind,
**dadurch gekennzeignet, dass** der großflächige Austrittsbereich (18) und die weiteren Austrittsbereiche hinsichtlich Luftemperatur getrennt ansteuerbar sind.

2. Belüftungsvorrichtung nach Anspruch 1,
**dadurch gekennzeichnet, dass**
- der Durchmesser der Austrittsausnehmungen im Bereich zwischen 0,5 bis 5,0 mm (Millimeter), insbesondere im Bereich zwischen 1,5 bis 3,0 mm (Millimeter), liegt.

3. Belüftungsvorrichtung nach Anspruch 1 und/oder 2,
**dadurch gekennzeichnet, dass**
- der großflächige Austrittsbereich (18) als Perforationsfläche ausgebildet ist.

4. Belüftungsvorrichtung nach einem oder mehreren der Ansprüche 1 bis 3,
**dadurch gekennzeichnet, dass**
- die Luftaustrittsausnehmungen (26) rasterförmig vorhanden sind.

5. Belüftungsvorrichtung nach einem oder mehreren der vorstehenden Ansprüche,
**dadurch gekennzeichnet, dass**
- der großflächige Austrittsbereich (18) vornehmlich auf der Oberseite des Instrumententafelbauteils (12) vorhanden ist.

6. Belüftungsvorrichtung nach einem oder mehreren der vorstehenden Ansprüche,
**dadurch gekennzeichnet, dass**
- der großflächige Austrittsbereich (18) im Wesentlichen über die gesamte Breite des Instrumententafelbauteils (12) vorhanden ist.

7. Belüftungsvorrichtung nach einem oder mehreren der vorstehenden Ansprüche,
**dadurch gekennzeichnet, dass**
- der mittlere Bereich des großflächigen Austrittsbereichs (18) gegenüber den Randbereichen verbreitert ausgebildet ist.

8. Belüftungsvorrichtung nach einem oder mehreren der vorstehenden Ansprüche,
**dadurch gekennzeichnet, dass**
- der großflächige Austrittsbereich (18) mit einer homogen perforierten Abdeckeinrichtung aus einer Trägereinheit und einer Kaschiereinheit verkleidet ist.

9. Belüftungsvorrichtung nach Anspruch 8,
**dadurch gekennzeichnet, dass**
- die Kaschiereinheit aus Leder, Metall, Kunststoff oder Textilfasern besteht, gegebenenfalls mit einer Lackierung.

10. Belüftungsvorrichtung nach einem oder mehreren der vorstehenden Ansprüche,
**dadurch gekennzeichnet, dass**
- zusätzlich zum großflächigen Austrittsbereich (18) mit diffusem Austritt, weitere, insbesondere düsenförmige Austrittsbereiche mit zielgerichtetem Luftaustritt vorhanden sind.

11. Belüftungsvorrichtung nach Anspruch 10,
**dadurch gekennzeichnet, dass**
- die weiteren Austrittsbereiche außerhalb und/oder innerhalb des großflächigen Austrittsbereiches angeordnet sind.

12. Belüftungsvorrichtung nach Anspruch 10 oder 11,
**dadurch gekennzeichnet, dass**
- ein weiterer Austrittsbereich innerhalb des großflächigen Austrittsbereichs als Defrosterdüse für die Windschutzscheibe des Fahrzeuges ausgebildet ist.

13. Belüftungsvorrichtung nach Anspruch 2,
**dadurch gekennzeichnet, dass**
- die Anzahl der Austrittsausnehmungen pro cm² (Quadratzentimeter) im Bereich zwischen 10 und 50 liegt.

14. Belüftungsvorrichtung nach einem oder mehreren der vorstehenden Ansprüche,
**dadurch gekennzeichnet, dass**
- der großflächige Austrittsbereich als Lochblech ausgebildet ist.

15. Belüftungsvorrichtung nach einem oder mehreren der vorstehenden Ansprüche,
**dadurch gekennzeichnet, dass**
- unterhalb des großflächigen Austrittsbereiches ein Vlies angeordnet ist.

16. Belüftungsvorrichtung nach einem oder mehreren der vorstehenden Ansprüche,
**dadurch gekennzeichnet, dass**
- die Strömungsgeschwindigkeit der durch den großflächigen Austrittsbereich strömenden Luft im Bereich zwischen 0,5 bis 1,0 m/s (Meter pro Sekunde) liegt.

## Claims

1. Ventilation device (10) for a vehicle interior, having
- at least one air outlet arranged on the instrument panel component (12) of the vehicle,
- an air-distributing system (14) for supplying the air to the air outlet,
- a control device (16) for controlling the quantity and temperature of the air supplied, and
- at least one extensive outlet region (18) which is distributed over the surface of the instrument panel component (12) and has a multiplicity of small outlet recesses (26) which keep the flow velocity of the air so low that a diffuse and unspecific outlet of air occurs,
the extensive outlet region (18) and the further outlet regions being activatable separately with regard to quantity of air, **characterized in that** the extensive outlet region (18) and the further outlet regions can be activated separately with regard to air temperature.

2. Ventilation device according to Claim 1, **characterized in that**
- the diameter of the outlet recesses is in the region of between 0.5 to 5.0 mm (millimetres), in particular in the region of between 1.5 to 3.0 mm (millimetres).

3. Ventilation device according to Claim 1 and/or 2, **characterized in that**
- the extensive outlet region (18) is designed as a surface of perforations.

4. Ventilation device according to one or more of Claims 1 to 3, **characterized in that**
- the air outlet recesses (26) are present in the form of a grid.

5. Ventilation device according to one or more of the preceding claims, **characterized in that**
- the extensive outlet region (18) is present primarily on the upper side of the instrument panel component (12).

6. Ventilation device according to one or more of the preceding claims, **characterized in that**
- the extensive outlet region (18) is present essentially over the entire width of the instrument panel component (12).

7. Ventilation device according to one or more of the preceding claims, **characterized in that**
- the central region of the extensive outlet region (18) is designed such that it is widened in comparison to the edge regions.

8. Ventilation device according to one or more of the preceding claims, **characterized in that**
- the extensive outlet region (18) is lined with a homogeneously perforated covering device comprising a support unit and a laminating unit.

9. Ventilation device according to Claim 8, **characterized in that**
- the laminating unit consists of leather, metal, plastic or textile fibres, if appropriate with a coat of varnish.

10. Ventilation device according to one or more of the preceding claims, **characterized in that**
- in addition to the extensive outlet region (18) with a diffuse outlet, there are further, in particular nozzle-shaped, outlet regions with a specific outlet of air.

11. Ventilation device according to Claim 10, **characterized in that**
- the further outlet regions are arranged outside and/or within the extensive outlet region.

12. Ventilation device according to Claim 10 or 11, **characterized in that**
- a further outlet region within the extensive outlet region is designed as a defroster nozzle for the windscreen of the vehicle.

13. Ventilation device according to Claim 2, **characterized in that**
- the number of outlet recesses per cm² (square centimetres) is in the region of between 10 and 50.

14. Ventilation device according to one or more of the preceding claims, **characterized in that**
- the extensive outlet region is designed as a perforated plate.

15. Ventilation device according to one or more of the preceding claims, **characterized in that**
- a non-woven fabric is arranged below the extensive outlet region.

16. Ventilation device according to one or more of the preceding claims, **characterized in that**
- the flow velocity of the air flowing through the extensive outlet region is in the region of between 0.5 to 1.0 m/s (metre per second).

## Revendications

1. Dispositif d'aération (10) de l'espace intérieur d'un véhicule, qui comprend
- au moins une sortie d'air agencée sur le composant de tableau de bord (12) du véhicule,
- un système de répartition d'air (14) qui amène l'air à la sortie d'air,
- un dispositif de réglage (16) qui règle la quantité et la température de l'air amené et
- au moins une zone de sortie (18) de grande surface qui est répartie sur la surface du composant de tableau de bord (12) et qui présente plusieurs petites découpes de sortie (26) qui maintiennent la vitesse d'écoulement de l'air à un niveau suffisamment bas pour que la sortie d'air qui en découle soit diffuse et non orientée,
dans lequel la zone de sortie de grande surface (18) et les autres zones de sortie peuvent être commandées séparément en termes de débit d'air,
**caractérisé en ce que** la zone de sortie de grande surface (18) et les autres zones de sortie peuvent être commandées séparément en termes de température de l'air.

2. Dispositif d'aération selon la revendication 1, **caractérisé en ce que** le diamètre des découpes de sortie est compris dans la plage de 0,5 à 5,0 mm (millimètres) et en particulier dans la plage de 1,5 à 3,0 mm (millimètres).

3. Dispositif d'aération selon les revendications 1 et/ou 2, **caractérisé en ce que** la zone de sortie de grande surface (18) est configurée comme surface perforée.

4. Dispositif d'aération selon l'une ou plusieurs des revendications 1 à 3, **caractérisé en ce que** les découpes de sortie d'air (26) présentent la forme d'une grille.

5. Dispositif d'aération selon l'une ou plusieurs des revendications précédentes, **caractérisé en ce que** la zone de sortie de grande surface (18) se trouve principalement sur le côté supérieur du composant de tableau de bord (12).

6. Dispositif d'aération selon l'une ou plusieurs des revendications précédentes, **caractérisé en ce que** la zone de sortie de grande surface (18) se trouve essentiellement sur toute la largeur du composant de tableau de bord (12).

7. Dispositif d'aération selon l'une ou plusieurs des revendications précédentes, **caractérisé en ce que** la zone médiane de la zone de sortie de grande surface (18) a une configuration plus large que les zones de bord.

8. Dispositif d'aération selon l'une ou plusieurs des revendications précédentes, **caractérisé en ce que** la zone de sortie de grande surface (18) est revêtue d'un dispositif de recouvrement perforé de manière homogène et constitué d'une unité de support et d'une unité contrecollée.

9. Dispositif d'aération selon la revendication 8, **caractérisé en ce que** l'unité contrecollée est constituée de cuir, de métal, de matière synthétique ou de fibres textiles et est éventuellement peinte.

10. Dispositif d'aération selon l'une ou plusieurs des revendications précédentes, **caractérisé en ce que** d'autres zones de sortie, en particulier en forme d'ajutages à sortie d'air orientée sont prévues en plus de la zone de sortie de grande surface (18) à sortie diffuse.

11. Dispositif d'aération selon la revendication 10, **caractérisé en ce que** les autres zones de sortie sont agencées hors de et/ou dans la zone de sortie de grande surface.

12. Dispositif d'aération selon les revendications 10 ou 11, **caractérisé en ce qu'**une autre zone de sortie agencée dans la zone de sortie de grande surface est réalisée comme ajutage de dégivrage pour le pare-brise du véhicule.

13. Dispositif d'aération selon la revendication 2, **caractérisé en ce que** le nombre des découpes de sortie par cm² (centimètre carré) est compris dans la plage de 10 à 50.

14. Dispositif d'aération selon l'une ou plusieurs des revendications précédentes, **caractérisé en ce que** la zone de sortie de grande surface est configurée comme tôle perforée.

15. Dispositif d'aération selon l'une ou plusieurs des revendications précédentes, **caractérisé en ce qu'**un feutre est agencé sous la zone de sortie de grande surface.

16. Dispositif d'aération selon l'une ou plusieurs des revendications précédentes, **caractérisé en ce que** la vitesse à laquelle l'air traverse la zone de sortie de grande surface est comprise dans la plage de 0,5 à 1,0 m/s (mètre par seconde).
